# NEW EUROPEAN PATENT SPECIFICATION

(11) **EP 0 369 508 B2**
(45) Date of publication and mention of the opposition decision: **02.12.1998**
(45) Mention of the grant of the patent: 04.03.1992
(21) Application number: 89202716.0
(22) Date of filing: 26.10.1989
(51) Int. Cl.: A01G 9/14

(54) **Greenhouse, ridge profile and bar coupling therefor**
Gewächshaus, Firstprofil und Sprossenverbindung dafür
Serre, profilés de faîtage et connexion de profilés

(30) Priority: 30.12.1988 NL 8803225
(43) Date of publication of application: 23.05.1990
(73) Proprietor: Bordeso B.V., 2671 CV Naaldwijk (NL)
(72) Inventor: Bom, Petrus Leonardus Josef, NL-3155 BB Maasland (NL)
(74) Representative: Konings, Lucien Marie Cornelis Joseph

(56) References cited:
- DE-A- 3 626 760
- GB-A- 755 465
- NL-C- 168 110
- US-A- 4 201 019
- US-A- 4 439 969

## Description

The invention relates in the first place to a glasshouse as mentioned in the preamble of claim 1.

In order to anchor the bars to the ridge profile, without having to drill holes in the ridge profile before or during the mounting of the bars, the ridge profile known for instance from NL-C-168110 has an anchor space under the bars, in which the head of a hammer head bolt grips, which grips for anchorage to the underside of the bars by means of an anchor clamping plate.

It is noted that a glasshouse is known from GB-A-755465 whereby the bars are fixed to the ridge profile by means of angle pieces and bolts extending through the ridge profile. The underside of the ridge profile is hereby situated at a higher level than the undersides of the bars. The bolts require a hole drilling operation. This is very disturbing during mounting of the bars and must be carried out by persons standing at a high level. If the holes are drilled beforehand, they must be carefully drilled in the correct positions and - as seen in lengthwise direction of the ridge profile - there is a committment to a predetermined mutual position of the ridge profile in relation to the bars. In contrast, the invention avoids the drilling of holes and still reduces the shadow from the ridge profile.

DE-C-3626760 discloses a glasshouse having a roof comprising inclined beams and bars arranged therebetween. Said bars have profiled anchoring pieces which are arranged at higher level than the lower edges of the beams. However, said bars are not continuous and are connected at the sides of the beams by means of angle pieces and bolts. The profiled anchoring pieces of the bars are not arranged between cross cut ends of said beams.

The object of the invention is to improve the glasshouse of the kind set forth above such that plants therein can be grown more efficiently.

According to the invention this object is achieved with the measures of the characterizing portion of claim 1.

The invention provides the insight that the anchoring of the bars to the ridge profile is possible in all sorts of ways in the case that the ridge profile extends less far downward, that the shading action of the ridge profile is reduced with the reduction of its height, that the production costs of the ridge profile are reduced with the reduction of its height and that while it is true that with the use of less material for the ridge profile the strength thereof diminishes, such a ridge profile with low bending resistance is still very useful, because the roof is mainly supported by the gutters, which can be robustly constructed in a simple manner for this purpose with a considerable bearing capacity.

The firm Prins of Dokkum, the Netherlands, made public a glasshouse comprising a ridge profile and bars connected thereto by means of a bar coupling, whereby said ridge profile is provided at both sides with a profiled anchoring flange extending transversely outwards and each bounding an anchor space for receiving a bar end portion, which is adapted to the shape of said anchor space, said bar end portion constituting part of said bar coupling, wherein said bars are positioned on either side of said ridge profile at its portion found between its ends and wherein said anchoring flanges and also the underside of said ridge profile are situated at a higher level than the lower edges of the bar profiles of the bars facing towards the said ridge profile, wherein said profiled anchoring flanges are arranged between the cross cut ends of two bars situated on either side of said ridge profile. The ridge profile of this glasshouse is a broad profile which strongly obstructs the light due to the anchoring flanges extending outwards. The two bars situated at either side of said ridge profile are not firmly interconnected because it is not provided with a coupling member extending under said ridge profile and engaging in a clamped manner the two bars positioned at either side of the ridge profile. Instead thereof the two bars are individually clamped to the ridge profile by means of wedges onto the anchoring flanges.

It is remarked that this glasshouse has at its ends instead of bars strong endbeams, which are broader and higher profiles producing more shadow than the normal bars. These endbeams only at one of their both sides do receive transparent plates. These endbeams are interconnected by a coupling member extending under the end of the ridge profile.

It is noted that a Drunenkas is known which is built at Drunen, the Netherlands, and which as garden centre is open to the public, said Drunenkas having a roof supported by pillars and by heavy beams connected to said pillars. Said heavy beams receive glassplates and could be seen as bars. However, the portions of the roof where there is no pillar have other bars of smaller dimension. The underside of the ridge profile is not situated at a higher level than the lower edges of the bar profiles of said other bars. This glasshouse does not have a roof mainly supported by the gutters.

Preferred embodiments according to the invention are designated in the other claims and are described in the description following hereinafter with reference to drawings, in which diverse variants are shown. In the drawings in schematic form:
Fig. 1 shows a section through a fraction of a glasshouse according to the invention;
Fig. 2 is detail II from figure 1 on larger scale;
Fig. 3 shows a section along the line III-III from figure 1 on a larger scale;
Fig. 4-7 each show a different variants of a bar coupling according to the invention; and
Fig. 8 is a section along the line VIII-VIII from figure 7.

A glasshouse 1 comprises pillars and trusses (not drawn) which support in a robust manner gutters 2 which because of their shape generally have a strong bearing capacity, in particular when they are embodied in tubular form. The gutters 2 are firmly connected in a manner not drawn to the trusses and/or the pillars.

The roof 3 between two gutters 2 consists substantially of a ridge profile 4, preferably of extruded aluminium; bars 5, preferably of extruded aluminium, and roof panels 6 for instance glass plates or sheets of light transparent plastic.

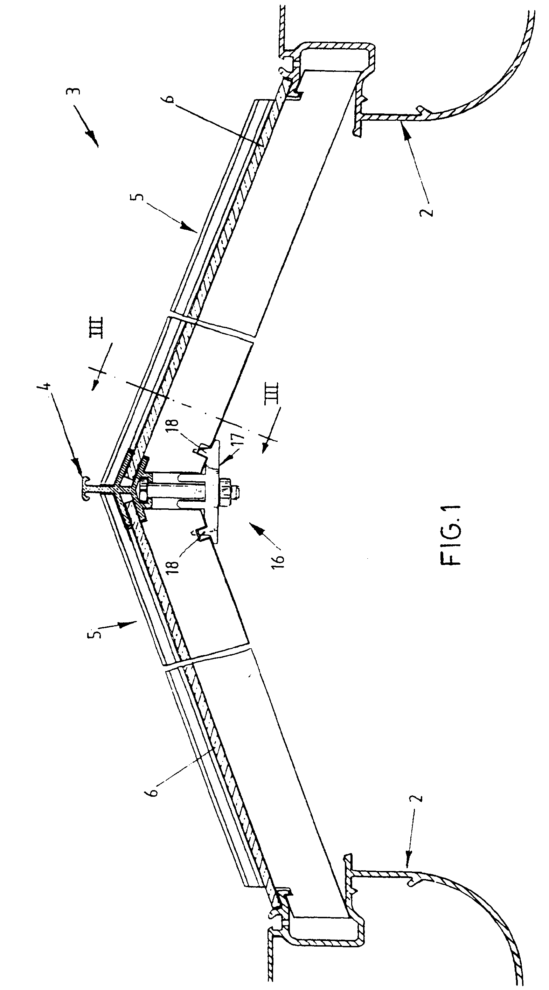

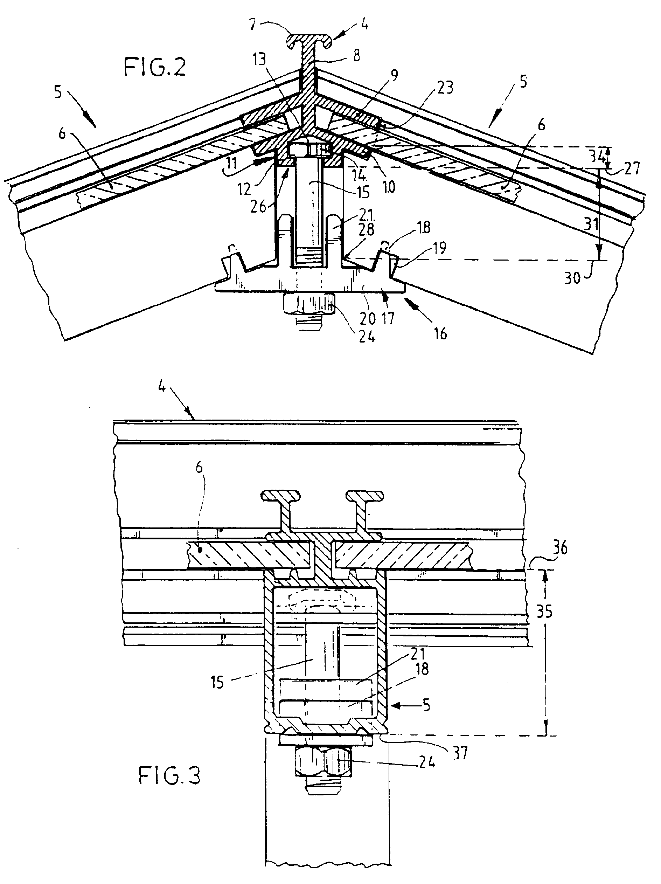

The ridge profile 4 comprises:
a pivoting head 7, on which roof windows (not drawn) can grip pivotally;
a vertical body 8;
upper flanges 9 and lower flanges 10 connected in downward sloping manner to the body 8, and between which roof panels 6 are arranged;
and an anchoring piece 11 fitted to the underside, consisting in figures 1 and 2 of L-shaped profile pieces 11 which together with the lower flanges 10 bound an anchor cavity 13, in which a bolt head 14 of a screw bolt 15 is arranged.

Per bar coupling 16 a coupling element 17 is available through which the bolt 15 protrudes centrally, and which has two teeth 18, which grip through incisions 19 into tubular bars 5. The bar profile of a bar 5 is shown in figure 3. The coupling element 17 clamps with its plate body 20 against the underside of both bars 5. The coupling element 17 has two standing ribs 21, against which the bars 5 support. In this way the coupling element 17 functions as stop element. The bars 5 each have an incision 23 for arranging therein of the flanges 9 and 10. Each bar 5 further supports against the body 8, against the underside of the lower flanges 10 and against the L-shaped profile pieces 12. By tightening the nut 24 a bar coupling 16 is realised which anchors the bars 5 firmly to the ridge profile 4 and to each other, whereby the underside 26 of the ridge profile 4 is situated at a higher level 27 than the level 30 of the lower edge 28 of the bar pro files of bars 5 facing towards the ride profile 4. The difference in level 31 between the stated levels 27 and 30 is bridged by the length of the bolt 15. In other words, the underside 26 of the ridge profile 4 is situated at a smaller distance 34 from the bearing flanges 10 than the difference in height 35 between the roof panel bearing surface 36 and the underside 37 of the bar 5 (fig. 3).

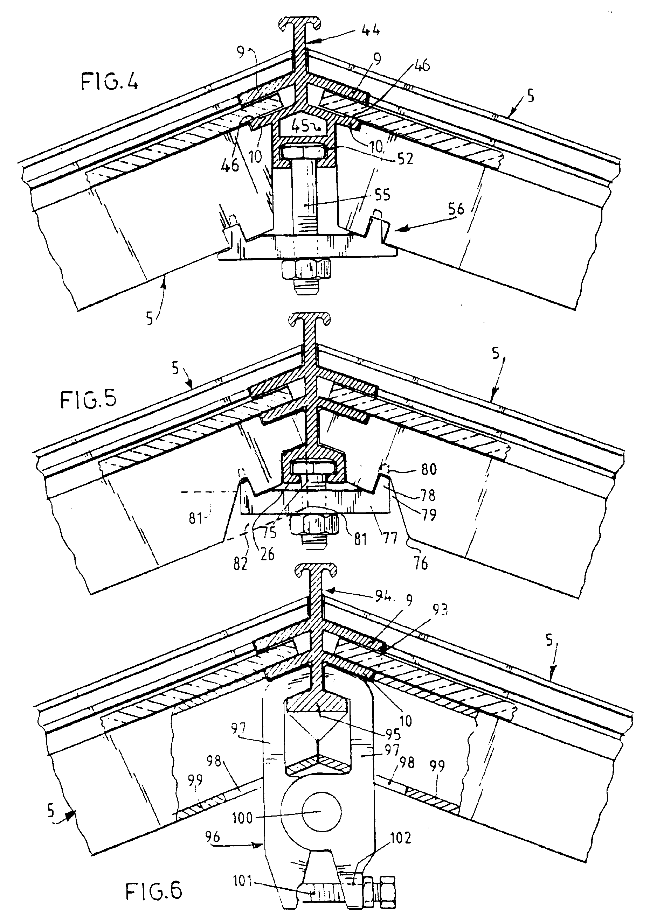

In the variant according to the invention in figure 4 the ridge profile 44 has a slightly lower positioned anchoring piece 52 and a somewhat shorter bolt 55 in comparison to the ridge profile 4 Between the flanges 10 and the anchoring piece 52 a sheath 45 is formed, which results in this ridge profile 44 having a greater torsion stiffness, which can be important in certain circumstances, for example on a side of the glasshouse or in the case of a large span between ridge and gutter. Each flange 10 has on its edge a bearing back 46 on which the glass plates are laid. In other respects this coupling 56 is identical with coupling 16.

The variant according to the invention in figure 5 has mainly the same ridge profile 44 as that in figure 4. In this embodiment a short bolt 75 is employed, while the bar profile has a lower edge 76 which is situated at some distance from the bolt 75. The coupling element 77 is somewhat broader than or practically as broad as the bar profile of the bars 5, so that teeth 78 grip into cut away portions 79 of the vertical flanges of the bars 5, while narrower and higher teeth 80 protrude breadthwise between these flanges while fitting inside. The bars 5 are slightly cut away next to the coupling piece 77. Typifying for the present invention in this figure is that the underside 26 of the ridge profile 44 is situated at a higher level than the lower edge 76 of the bar profile of bar 5 or even higher than the imaginary lower edge 81 of the imaginary bar profile end 82 indicated with dashed lines.

In figure 6 a ridge profile 94 has a horizontal flange 95 as bottom piece. In other respects the ridge profile 94 corresponds with the ridge profile 4. The bars 5 have incisions 93 for receiving flanges 9, 10 and 95 and come up against each other under the ridge profile 94. The coupling means consist of a clamp 96 with two clamp jaws 97 which protrude through openings 98 of the lower flanges 99 of the bars 5 and grip at the top onto the ridge profile 94 above the flange 95. The clamp jaws 97 pivot on a shaft 100 and are tensioned by means of a screw bolt 101 which is arranged in a threaded hole 102 of the one damp jaw 97 and supports against the other clamp jaw 97. The clamp jaws 97 enclose both the bars 5 and clamp these with good anchorage fixedly to the ridge profile 94.

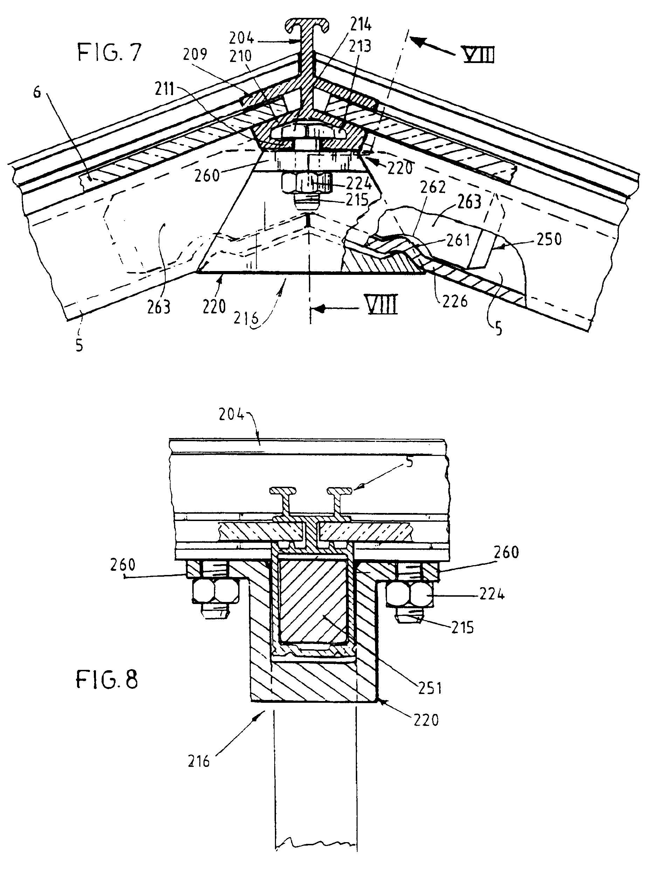

The ridge profile 204 in figure 7 has under the lower Range 210, which forms the bearing flange for a roof panel 6, a thereto connected anchoring piece 211 for bounding an anchor cavity 213. Both bars 5 with a tubular profile are mutually connected by means of a coupling element 250, of which the middle piece 251 is arranged in a clamping piece 220, which is clamped with two bolts 215 with nuts 224 that grip onto flanges 260, to the ridge profile 204, while the bolt heads 214 are situated as hammer heads in the anchor cavity 213. During this clamping action the clamping piece 220 deforms the underside 226 of the bar profile according to a cruved impression 261 which positions itself in a hollow 262 of a projection 263 of the coupling element 250, which projection is inserted into the tubular bar 5.

In this way a firm bar coupling 216 is realised, while once again, as with the other embodiments, the underside of the ridge profile 204 is low and causes little shadow.

## Claims

1. Glasshouse (1) comprising gutters (2) and a roof (3) extending between said gutters (2), said roof (3) being substantially supported by said gutters (2) and comprising at least one ridge profile (4, 44, 94, 204) and bars (5) connected thereto by means of at least one bar coupling (16, 56, 96, 216), wherein said ridge profile (4, 44, 94, 204) has a pivot head (7) on which roof windows can grip pivotally, a vertical body (8) and upper and lower flanges (9, 10, 209, 210) between which light transparent panels (6) are arranged, said ridge profile is furthermore provided with at least one profiled anchoring piece (11, 52, 95, 211) comprising at least one transversely extending part (12, 95, 211) bounding at least one anchor space (13, 213) for receiving bar connecting means (15, 55, 75; 97, 215) of said bar coupling (16, 56, 96, 216), said bars being positioned on either side of the ridge profile (4, 44, 94, 204) at its portion found between its ends, said bars (5) having a tubular profile, said flanges (9, 10, 209, 210) constituting the most sidewardly protruding parts of said ridge profile (4, 44, 94, 204);
light transparent roof panels (6) being arranged in said bars (5) at both sides thereof;
said bar coupling (16, 56, 96, 216) comprising at least one coupling element (17, 77, 100, 101, 102, 220) extending under said ridge profile (4, 44, 94, 204); wherein said bar coupling (16, 56, 96, 216) by means of said at least one coupling element (17, 77; 100, 101, 102, 220, 250) and the bar connecting means connected thereto mutually connects said ridge profile and said two bars (5) positioned on either side of said ridge profile (4, 44, 94, 204);
characterised in that each profiled anchoring piece (11, 52, 95, 211) and also the underside (26) of said ridge profile are situated at a higher level (27) than the lower edges (28) of the bar profiles of the bars (5) facing towards said ridge profile (4, 44, 94, 204), and that each profiled anchoring piece (11, 52, 95, 211) is arranged between the cross cut ends of two bars (5) situated on either side of said ridge profile (4, 44, 94, 204).

2. Glasshouse (1) as claimed in claim 1, characterized in that the bar coupling (16) has a fastening bolt (15), which bridges the difference in level (31) between the lower edges (28) of the bar profiles (29) and the anchoring piece (12) of the ridge profile (4) situated at a higher level.

3. Glasshouse (1) as claimed in claim 1 or 2, characterized in that flanges (10) of the ridge profile (4) which support roof panels, bound at least one anchor cavity (13) present thereunder.

4. Glasshouse (1) claimed in any of the preceding claims, characterized in that a tleast one bar coupling (16) is provided with a coupling element (17) that is arranged between two bars (5) as stop element.

5. Glasshouse (1) as claimed in any of the preceding claims, characterized in that a coupling element (17) clamped fixedly by a bolt connection grips for anchoring into a pair of bars (5).

6. Glasshouse (1) as claimed in any of the preceding claims, characterized in that a coupling element (17) that mutually connects a pair of bars (5) by means of a clamping piece (20) and at least one bolt connection (15,24) is clamped fixedly to the ridge profile (4).

## Patentansprüche

1. Gewächshaus (1) mit Trägerprofilen (2) und einem sich zwischen den Trägerprofilen (2) erstreckendem Dach (3), das im wesentlichen von den Trägerprofilen (2) getragen wird und wenigstens ein Firstprofil (4, 44, 94, 204) und Sprossen (5) aufweist, die mit Hilfe wenigstens einer Sprossenverbindung (16, 56, 96, 216) damit verbunden sind, wobei das Firstprofil (4, 44, 94 204) einen Schwenkkopf (7) hat, an dem Dachfenster schwenkbar eingreifen können, einen vertikalen Körper (8) und obere und untere Flansche (9, 10, 209, 210), zwischen denen lichtdurchlässige Panele (6) angeordnet sind, wobei das Firstprofil zudem versehen ist mit wenigstens einem profilierten Verankerungsteil (11, 52, 95, 211) mit wenigstens einem sich transveral erstreckenden Teil (12, 95, 211) zur Begrenzung wenigstens eines Verankerungsraumes (13, 213) zur Aufnahme von Sprossenverbindungsmitteln (15, 55, 75; 97, 215) der Sprossenverbindung (16, 56, 96, 216), wobei die Sprossen auf beiden Seiten des Firstprofils (4, 44, 94, 204) an dessen Ab-schnitt zwischen seinen Enden angeordnet sind, die Sprossen (5) rohrförmiges Profil haben, die Flansche (9, 10, 209, 210) die seitlich vorstehensten Teile des Firstprofils (4, 44, 94, 204) bilden; lichtdurchlässige Dachpanele (6) an beiden Seiten in den Sprossen (5) angeordnet sind; die Sprossenverbindung (16, 56, 96, 216) wenigstens ein Verbindungselement (17, 77, 100, 101, 102, 220) umfaßt, das sich unter dem Firstprofil (4, 44, 94, 204) erstreckt; wobei die Sprossenverbindung (16, 56, 96, 216) mittels des wenigstens einen Verbindungselementes (17, 77, 100, 101, 102, 220, 250) und des damit verbundenen Sprossenverbindungsmittels das Firstprofil und die zwei Sprossen (5), die auf beiden Seiten des Firstprofils (4, 44, 94, 204) angeordnet sind, gegenseitig miteinander verbindet, dadurch gekennzeichnet, daß jedes profilierte Verankerungsteil (11, 52, 95, 211) wie auch die Unterseite (26) des Firstprofils auf einem höheren Niveau (27) liegen als die unteren Kanten (28) der Sprossenprofile der Sprossen (5), die in Richtung des Firstprofils (4, 44, 94, 204) weisen, und daß jedes profilierte Verankerungsteil (11, 52, 95, 211) zwischen den Hirnflächen der zwei Sprossen (5) angeordnet ist, die an beiden Seiten des Firstprofils (4, 44, 94, 204) liegen.

2. Gewächshaus (1) nach Anspruch 1, dadurch gekennzeichnet,
daß die Sprossenverbindung (16) einen Befestigungsbolzen (15) aufweist, der den Niveauunterschied (31) zwischen den unteren Kanten (28) der Sprossenprofile (29) und dem Verankerungsteil (12) des Firstprofiles (4), das auf einem höheren Niveau angeordnet ist, überbrückt.

3. Gewächshaus (1) nach Anspruch 1 oder 2, dadurch gekennzeichnet,
daß Dachpaneele tragende Flansche (10) des Firstprofiles (4) wenigstens eine darunterliegende Verankerungsausnehmung (13) begrenzen.

4. Gewächshaus (1) nach einem der vorstehenden Ansprüche, dadurch gekennzeichnet,
daß wenigstens eine Sprossenverbindung (16) mit einem Verbindungseiement (17) versehen ist, das zwischen zwei Sprossen (5) als Stopelement angeordnet ist.

5. Gewächshaus (1) nach einem der vorstehenden Ansprüche, dadurch gekennzeichnet,
daß ein Verbindungselement (17), das mittels einer Bolzenverbindung festgeklemmt ist, zur Verankerung in ein Sprossenpaar (5) eingreift.

6. Gewächshaus (1) nach einem der vorstehenden Ansprüche, dadurch gekennzeichnet,
daß ein Verbindungselement (17) ein Sprossenpaar (5) mit Hilfe eines Klemmteiles (20) miteinander verbindet und wenigstens eine Bolzenverbindung (15, 24) an dem Firstprofil (4) festgeklemmt ist.

## Revendications

1. Serre (1) qui comporte des gouttières (2) et un toit (3) qui s'étend entre les gouttières (2), le toit (3) étant pratiquement supporté par les gouttières (2) et comprenant au moins un profilé de faîtage (4, 44, 94, 204) et des barres (5) qui lui sont raccordées par au moins un accouplement (16, 56, 96, 216) de barres, dans laquelle le profilé de faîtage (4, 44, 94, 204) a une tête de pivot (7) sur laquelle des fenêtres de toit peuvent être accrochées pour pivoter, un corps vertical (8) et des flasques supérieur et inférieur (9, 10, 209, 210) entre lesquels sont placés des panneaux (6) transparents à la lumière, le profilé de faîtage comportant en outre au moins une pièce profilée d'ancrage (11, 52, 95, 211) comprenant au moins une partie s'étendant transversalement (12, 95, 211) qui délimite au moins un espace d'ancrage (13, 213) destiné à loger des moyens de raccordement de barres (15, 55, 75 ; 97, 215) de l'accouplement de barres (16, 56, 96, 216), les barres étant positionnées de part et d'autre du profité de faîtage (4, 44, 94, 204) dans la partie qui est placée entre ses extrémités, les barres (5) ayant un profit tubulaire, les flasques (9, 10, 209, 210) constituant les parties qui dépassent le plus vers le côté du profilé de faîtage (4, 44, 94, 204), des panneaux de toit (6) transparents à la lumière étant placés dans les barres (5) des deux côtés de celles-ci,
l'accouplement de barres (16, 56, 96, 216) comprenant au moins un élément d'accouplement (17, 77, 100, 101, 102, 220, 250) s'étendant sous le profilé de faîtage (4, 44, 94, 204),
dans laquelle l'accouplement de barres (16, 56, 96, 216), au moyen dudit au moins un élément d'accouplement (17, 77, 100, 101, 102, 220, 250) et des moyens de raccordement de barres qui lui sont raccordés, assure la connexion mutuelle du profilé de faîtage et des deux barres (5) positionnées de part et d'autre du profilé de faîtage (4, 44, 94, 204),
caractérisée en ce que chaque pièce profilée d'ancrage (11, 52, 95, 211) et aussi ta face inférieure (26) du profilé de faîtage se trouvent à un niveau (27) supérieur à celui des bords inférieurs (28) des profilés de barre des barres (5) tournés vers le profilé de faîtage (4, 44, 94, 204), et en ce que chaque pièce profilée d'ancrage (11, 52, 95, 211) est placée entre les extrémités coupées transversalement des deux barres (5) placées de part et d'autre du profilé de faîtage (4, 44, 94, 204).

2. Serre (1) selon la revendication 1, caractérisée en ce que l'accouplement de barres (16) possède un boulon de fixation (15) qui couvre la différence de niveaux (31) entre les bords inférieurs (28) des profilés (29) de barres et la pièce d'ancrage (12) du profilé de faîtage (4) placée à un niveau supérieur.

3. Serre (1) selon la revendication 1 ou 2, caractérisée en ce que les flasques (10) du profilé de faîtage (4) qui supportent des panneaux de toit délimitent au moins une cavité d'ancrage (13) placée au-dessous.

4. Serre (1) selon l'une quelconque des revendications précédentes, caractérisée en ce qu'au moins un accouplement de barres (16) comporte un élément d'accouplement (17) placé entre deux barres (5) comme élément d'arrêt.

5. Serre (1) selon l'une quelconque des revendications précédentes, caractérisée en ce qu'un élément d'accouplement (17) serré en position fixe par une connexion à boulon s'accroche pour s'ancrer dans une paire de barres (5).

6. Serre (1) selon l'une quelconque des revendications précédentes, caractérisée en ce qu'un élément d'accouplement (17) qui raccorde mutuellement deux barres (5) par une pièce de serrage (20) et au moins une connexion à boulon (15, 24) est serré en position fixe sur le profilé de faîtage (4).
